# EUROPEAN PATENT SPECIFICATION

(11) **EP 3 793 048 B1**
(45) Date of publication and mention of the grant of the patent: **23.08.2023**
(21) Application number: 18929073.7
(22) Date of filing: 07.12.2018
(51) Int. Cl.: H01R 9/22, F24F 1/20, H01R 4/38, H01R 9/18, H01R 13/506

(54) **WIRING ASSEMBLY AND AIR CONDITIONER WITH SAME**
VERDRAHTUNGSANORDNUNG UND KLIMAANLAGE DAMIT
ENSEMBLE CÂBLAGE ET CLIMATISEUR COMPRENANT CE DERNIER

(30) Priority: 06.08.2018 CN 201810887480
(43) Date of publication of application: 17.03.2021
(73) Proprietor: Gree Electric Appliances, Inc. of Zhuhai, Zhuhai, Guangdong 519070 (CN)
(72) Inventor: YU, Xinfeng, Zhuhai City, Guangdong 519070 (CN); ZHANG, Yinyin, Zhuhai City, Guangdong 519070 (CN); HUANG, Zexiong, Zhuhai City, Guangdong 519070 (CN)
(74) Representative: V.O.
(86) International application number: PCT/CN2018/119862
(87) International publication number: WO 2020/029491

(56) References cited:
- CN-A- 108 155 491
- CN-A- 108 777 462
- CN-U- 2 082 031
- CN-U- 202 957 360
- CN-U- 204 273 920
- CN-U- 206 820 414
- CN-U- 206 820 414
- CN-Y- 2 692 895
- DE-A1-102012 009 643
- DE-A1-102013 114 519
- FR-A- 1 177 012
- KR-A- 20110 008 901
- US-A- 2 428 057

## Description

### Technical Field

The invention relates to the technical field of air conditioner equipment, and in particular to a wiring assembly and an air conditioner with the wiring assembly.

### Background

In an art known to inventors, based on a wiring plate structure of an electric box of an air conditioner, a bolt can be added to fix a wire connection piece in each channel of fixing a wire, such that the bolt corresponding to the wire must be unscrewed when the wire is assembled and detached every time, and problems of low wire detaching and assembling efficiency and troublesome maintenance are caused. When the air conditioner is repaired, in home of a terminal customer, once the connection piece bolt is lost, a wiring task may not be completed, and a problem of potential safety hazards existing in use of a user is caused.

A wire gripping structure for a terminal block is disclosed in Document D1 (DE102012009643A1); A wiring assembly is disclosed in D2 (CN108155491A).

### Summary

Some embodiments of the invention provide a wiring assembly and an air conditioner with the wiring assembly, as to solve a problem in a related technology that detaching and assembling efficiency of a wiring structure is low.

According to some embodiments of the invention, a wiring assembly is provided, including: a wiring base, wherein the wiring base is provided with an avoidance portion; and a wiring cover plate, wherein the wiring cover plate is provided with a protruding portion configured to cooperate with the avoidance portion, the wiring cover plate is provided with an assembling position connected with the wiring base, and when the wiring cover plate is located at the assembling position, the protruding portion is located within the avoidance portion, and a limiting space used for clamping a wire connection piece is formed between the protruding portion and the wiring base; wherein the avoidance portion is an avoidance notch provided on a first side wall of the wiring base; a conducting piece, a first end of the conducting piece is used to be conducted with the wire connection piece, and a second end of the conducting pieceis extended to an outside of the wiring base so as to form a wiring end; and a connecting piece, the wiring base and the wiring cover plate are provided with connection holes through which the connecting piece passes; the wiring base or the wiring cover plate is provided with an upright column, the wiring assembly further includes:
an elastic member, the elastic member is provided on the upright column in a sleeving manner, when the wiring cover plate is locked in the assembling position through the connecting piece, the elastic member is abutted against at least one of the wiring base and the wiring cover plate;
wherein the wiring base is provided with a limiting step, the wiring cover plate is provided with an elastic buckle configured to cooperate with the limiting step, when the wiring cover plate and the wiring base are located in an unlocking state by the connecting piece, a pre-tightening force is applied to the wiring cover plate and the wiring base by the elastic member so that the elastic buckle is abutted against a step surface of the limiting step.

In some embodiments, there are a plurality of avoidance portions, the plurality of avoidance portions are provided at intervals along a long side direction of the wiring base, there are a plurality of protruding portions, the plurality of protruding portions and the plurality of avoidance portions are provided correspondingly one by one.

In some embodiments, the wiring base includes a second side wall and a third side wall, the second side wall is provided opposite to the third side wall, a first end of the first side wall is provided adjacent to the second side wall, a second end of the first side wall is provided adjacent to the third side wall, the second side wall and/or the third side wall is provided with a limiting step, and the wiring cover plate is provided with an elastic buckle configured to cooperate with the limiting step.

In some embodiments, the conducting piece and the wiring base are connected together and form a whole structure, or the conducting piece and the wiring cover plate are connected together and form a whole structure.

In some embodiments, there are a plurality of conducting pieces, there are a plurality of avoidance portions, and there are a plurality of protruding portions, the plurality of avoidance portions and the plurality of protruding portions are mutually configured to cooperate to form the plurality of limiting spaces, the plurality of conducting pieces and the plurality of limiting spaces are provided correspondingly one by one.

In some embodiments, there are a plurality of upright columns, the plurality of upright columns are provided at intervals, there are a plurality of elastic members, the plurality of elastic members and the plurality of upright columns are provided correspondingly one by one.

In some embodiments, the elastic member is a spring.

In some embodiments, the protruding portion includes a first bulge, the wiring cover plate includes: a cover plate body, wherein a first cover plate edge, opposite to a first side wall of the wiring base, of the cover plate body is provided with the first bulge; and an elastic buckle, the elastic buckle is provided on at least one side edge adjacent to the first cover plate edge.

In some embodiments, the protruding portion further includes a second bulge, wherein a second cover plate edge, opposite to the first cover plate edge, of the cover plate body is provided with the second bulge, the second bulge and the first bulge are symmetrically provided, the first bulge is configured to cooperate with the avoidance portion so as to form the limiting space, or the second bulge is configured to cooperate with the avoidance portion so as to form the limiting space.

In some embodiments, there are a plurality of first bulges, the plurality of first bulges are provided at intervals along the first cover plate edge, there are a plurality of second bulges, the plurality of second bulges are provided at intervals along the second cover plate edge, the plurality of second bulges and the plurality of first bulges are provided correspondingly one by one, there are a plurality of avoidance portions, the plurality of avoidance portions and the plurality of first bulges are provided correspondingly one by one.

In some embodiments, when the wiring cover plate is locked in the assembling position by the connecting piece, the elastic buckle is provided at a distance from the step surface of the limiting step.

According to some embodiments of the invention, an air conditioner is provided, including the above wiring assembly.

A technical scheme of the invention is applied, through providing the avoidance portion on the wiring base, the protruding portion cooperated with the avoidance portion is provided on the wiring cover plate, and a limiting space for clamping the wire connection piece is formed between the protruding portion and the wiring base, such an arrangement enables the wire connection piece to be directly clamped on the wiring cover plate and the wiring base so as to avoid a step of fixing a bolt on the wiring base for the connection of the wire connection piece. The efficiency of detaching and assembling a wire is effectively improved, and user usage experience is improved.

### Brief Description of the Drawings

The accompanying drawings, which constitute a part of the present application, are used to provide a further understanding of the invention, and the exemplary embodiments of the invention and the description thereof are used to explain the invention, but do not constitute improper limitations to the invention. In the drawings:
Fig. 1 illustrates an exploded structure schematic diagram of a first embodiment of a wiring assembly according to the invention;
Fig. 2 illustrates an exploded structure schematic diagram of a second embodiment of the wiring assembly according to the invention;
Fig. 3 illustrates an exploded structure schematic diagram of a third embodiment of the wiring assembly according to the invention;
Fig. 4 illustrates a structure schematic diagram of a fourth embodiment of the wiring assembly according to the invention;
Fig. 5 illustrates a structure schematic diagram of a first perspective of an embodiment of a wiring base and a wiring cover plate according to the invention;
Fig. 6 illustrates a structure schematic diagram of a second perspective of the embodiment of the wiring base and the wiring cover plate according to the invention;
Fig. 7 illustrates a structure schematic diagram of a first perspective of an embodiment of the wiring cover plate according to the invention;
Fig. 8 illustrates a structure schematic diagram of a second perspective of the embodiment of the wiring cover plate according to the invention;
Fig. 9 illustrates a structure schematic diagram of a third perspective of the embodiment of the wiring cover plate according to the invention;
Fig. 10 illustrates a sectional structure schematic diagram of the embodiment of the wiring cover plate according to the invention;
Fig. 11 illustrates a structure schematic diagram of a first perspective of an embodiment of the wiring base according to the invention;
Fig. 12 illustrates a sectional structure schematic diagram of the embodiment of the wiring base according to the invention;
Fig. 13 illustrates a structure schematic diagram of a second perspective of the embodiment of the wiring base according to the invention;
Fig. 14 illustrates a structure schematic diagram of a third perspective of the embodiment of the wiring base according to the invention;
Fig. 15 illustrates a structure schematic diagram of a fourth perspective of the embodiment of the wiring base according to the invention;
Fig. 16 illustrates an exploded structure schematic diagram of an embodiment of the wiring base and an elastic member according to the invention;
Fig. 17 illustrates a structure schematic diagram of a fifth embodiment of embodiments of the wiring assembly according to the invention;
Fig. 18 illustrates an exploded structure schematic diagram of an embodiment of the wiring assembly and a wire connection piece according to the invention;
Fig. 19 illustrates an assembling structure schematic diagram of the embodiment of the wiring assembly and the wire connection piece according to the invention;
Fig. 20 illustrates a sectional structure schematic diagram of a sixth embodiment of the wiring assembly according to the invention;
Fig. 21 illustrates a sectional structure schematic diagram of a seventh embodiment of the wiring assembly according to the invention; and
Fig. 22 illustrates an assembling structure schematic diagram of the embodiment of the wiring assembly of an air conditioner electric box according to the invention.

Herein, the above drawings include the following drawing reference signs:
10, Wiring base; 11, Avoidance portion; 12, First side wall; 13, Second side wall; 14, Third side wall; 15, Limiting step;
20, Wiring cover plate; 21, Protruding portion; 22, Elastic buckle; 23, Cover plate body;
30, Conducting piece;
40, Connecting piece;
50, Upright column;
60, Elastic member; and
70, Wire connection piece.

### Detailed Description of the Embodiments

It should be noted that the embodiments in the present application and the features in the embodiments may be combined with each other without conflict. The invention will be described in detail below with reference to the accompanying drawings and in conjunction with the embodiments.

It should be noted that terms used here are only used for describing specific implementation modes, and are not intended to limit the exemplary implementation modes according to the present application. As used herein, unless clearly specified otherwise in the context, a singular form is also intended to include a plural form. In addition, it should also be understood that when the terms "comprising" and/or "including" are used in the description, it is indicated that there are features, steps, operations, devices, components and/or combinations thereof.

It should be noted that the terms "first", "second", and the like in the specification and claims of the present application and in the above drawings are used to distinguish similar objects and are not necessarily used to describe a specific sequence or order. It will be appreciated that the data used in this way may be interchanged where appropriate, so that the implementation manners of the present application described herein can be implemented, for example, in an order other than those illustrated or described herein. In addition, the terms "include" and "have" and any variations thereof are intended to cover non-exclusive inclusions. For example, a process, method, system, product, or equipment that comprises a series of steps or units need not be limited to those steps or units that are explicitly listed, and may instead include other steps or units that are not explicitly listed or inherent to these processes, methods, products or equipment.

For ease of description, spatially relative terms such as "on", "over", "on an upper surface", "above", etc. may be used herein to describe a spatial position relationship between one device or feature as shown in the figures and other devices or features. It will be appreciated that the spatially relative terms are intended to comprise different orientations of the device in use or operation in addition to the orientation of the device described in the figures. For example, if the device in the figures is turned upside down, the device described as "over other devices or configurations" or "on other devices or configurations" will be positioned "below other devices or configurations" or "under other devices or configurations". Thus, the exemplary term "over" may include both "above" and "below". The device may also be positioned in other different manners (rotated for 90 degrees or at other orientations), and the spatially relative descriptors used herein are interpreted accordingly.

Now, the exemplary implementation modes according to the present application are described in more detail with reference to the drawings. However, these exemplary implementation modes may be implemented in multiple different forms, and should not be interpreted to be limited to the implementation modes described here. It should be understood that these implementation modes are provided to make the invention of the present application thorough and complete, and adequately convey concepts of these exemplary implementation modes to those of ordinary skill in the art, in the drawings, for clarity, thicknesses of layers and regions may be enlarged, and the same reference sign is used to show the same device, therefore the description of them may be omitted.

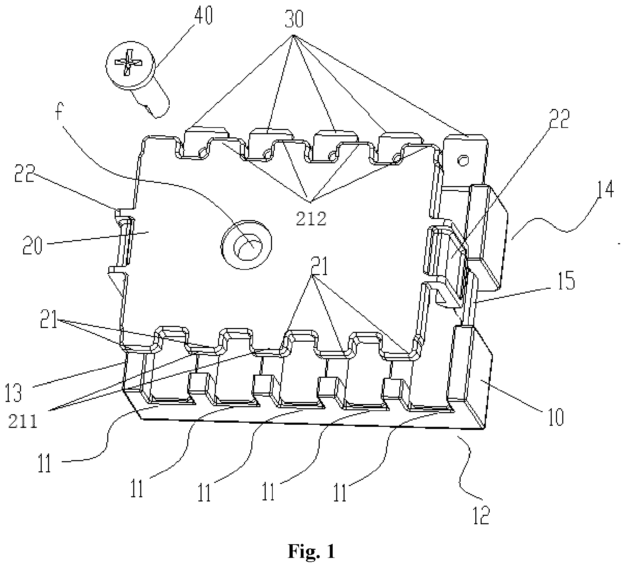

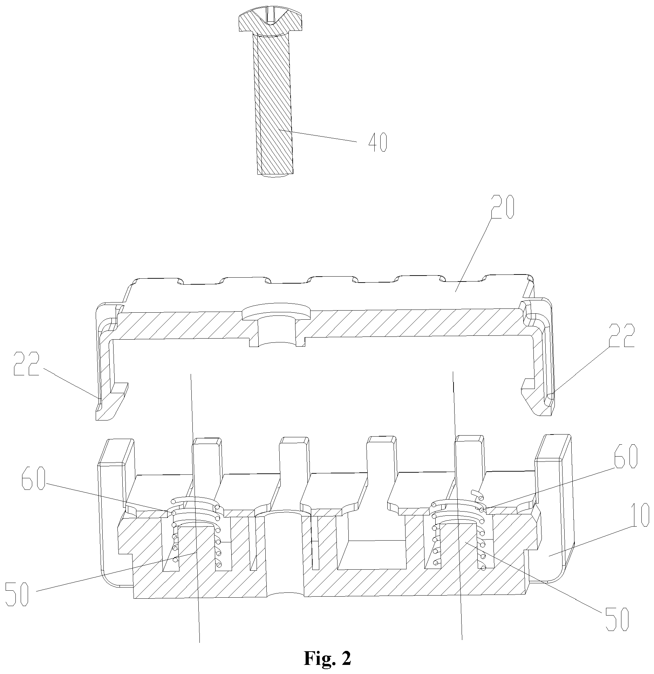

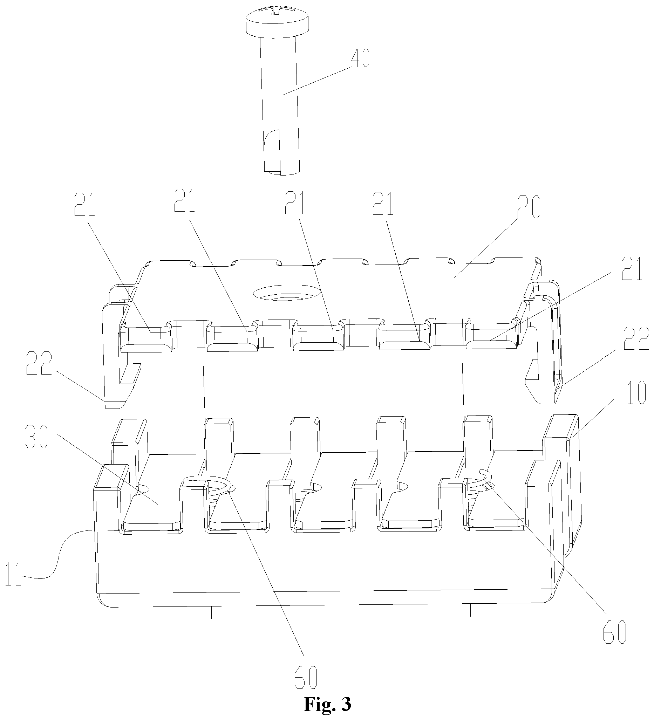

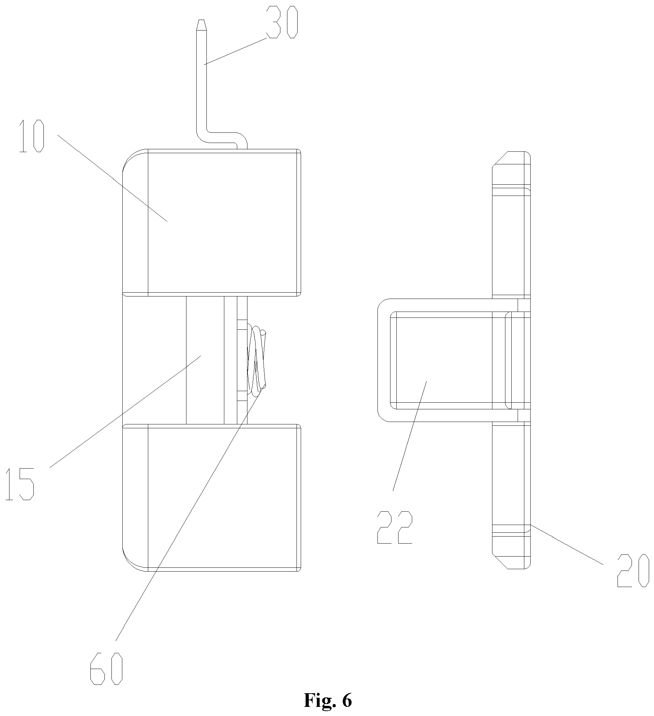

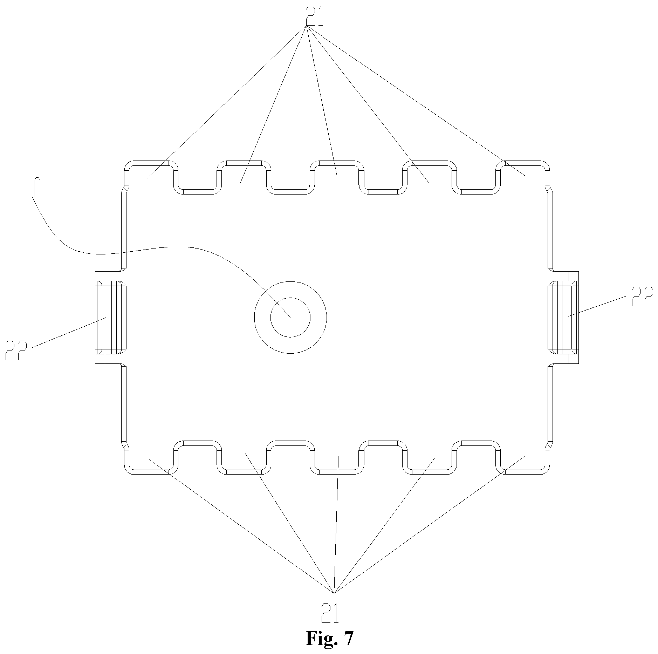

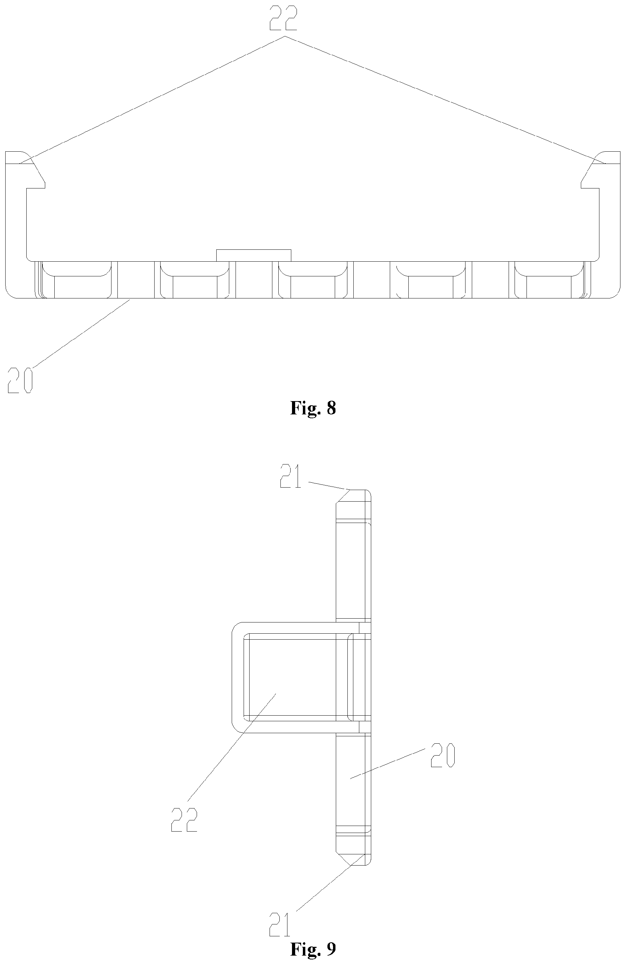

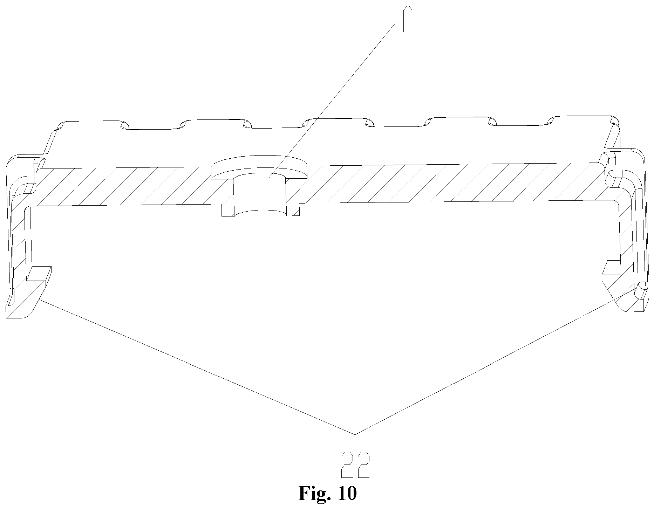

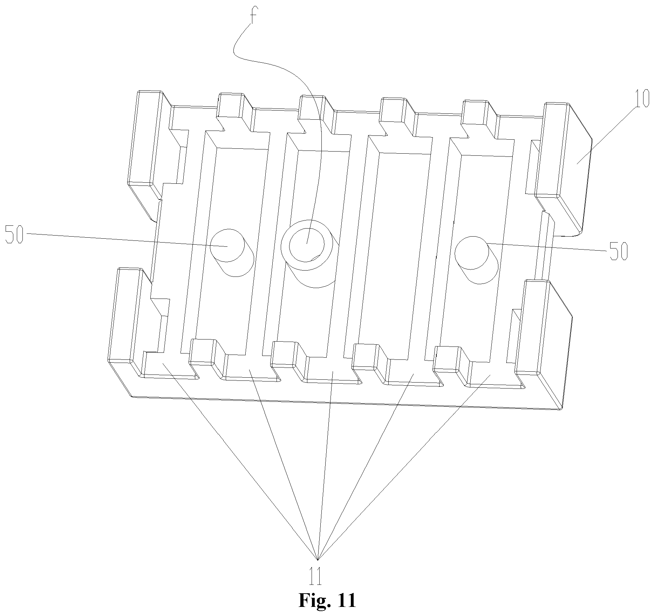

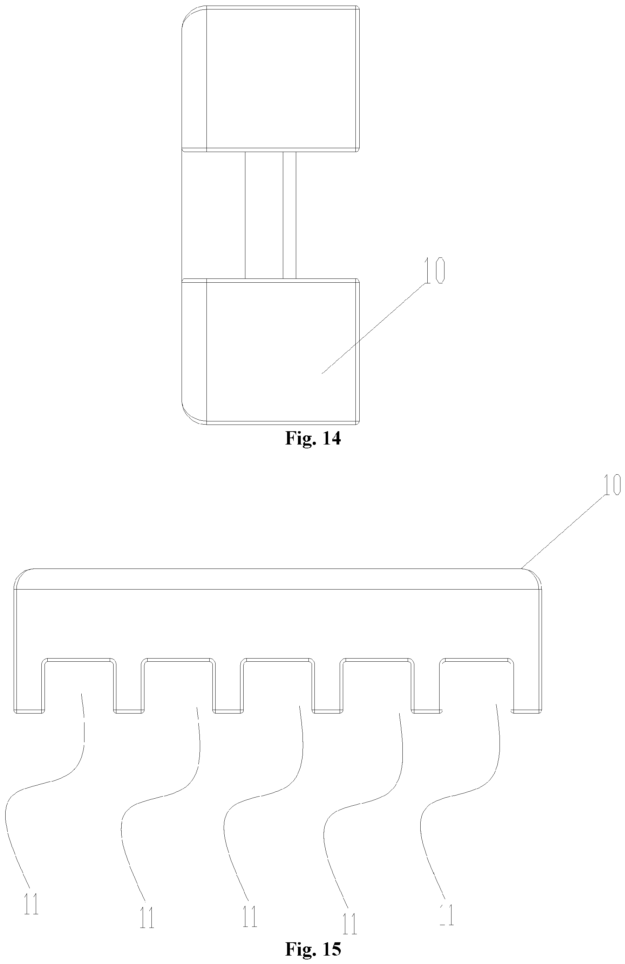

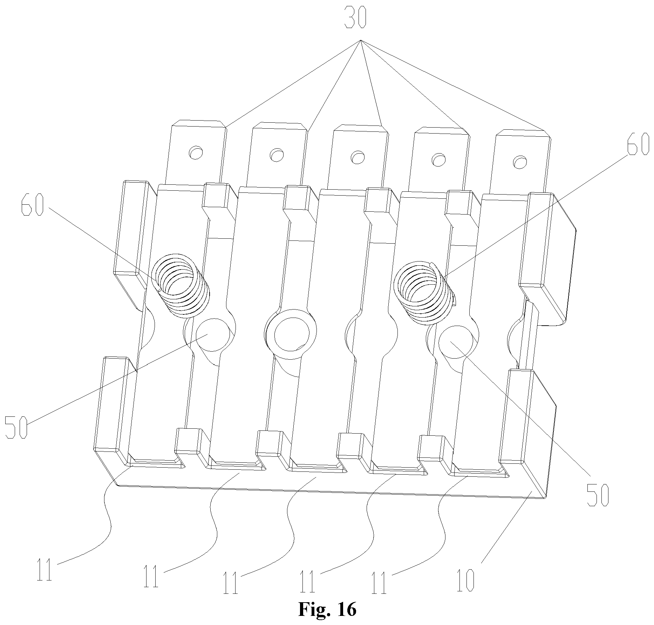

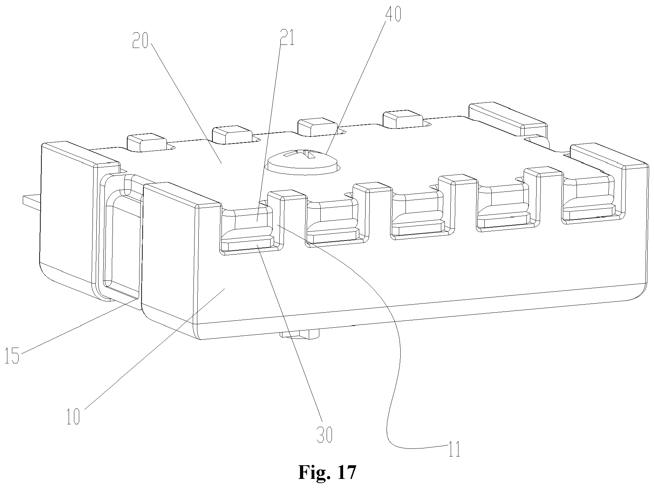

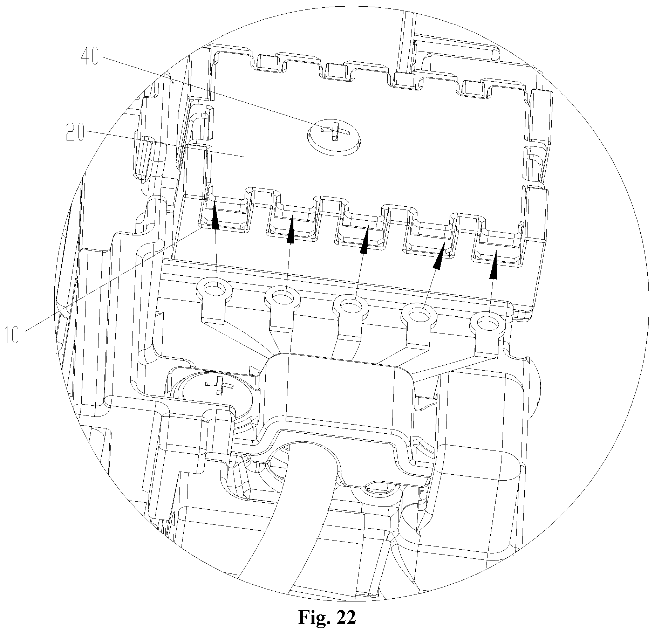

As shown in Fig. 1 to Fig. 22, according to an embodiment of the invention, a wiring assembly is provided.

As shown in Fig. 1, the wiring assembly includes a wiring base 10 and a wiring cover plate 20. The wiring base 10 is provided with an avoidance portion 11. The wiring cover plate 20 is provided with a protruding portion 21 cooperated with the avoidance portion 11. The wiring cover plate 20 is provided with an assembling position connected with the wiring base 10. When the wiring cover plate 20 is located at the assembling position, the protruding portion 21 is located within the avoidance portion 11, and a limiting space used for clamping a wire connection piece is formed between the protruding portion 21 and the wiring base 10.

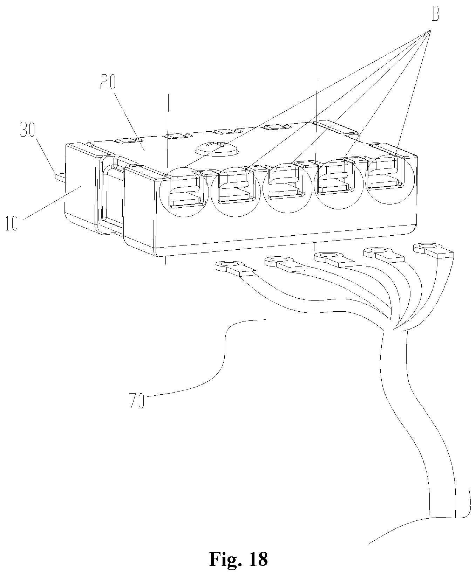

In the present embodiment, through providing the avoidance portion on the wiring base 10, the protruding portion 21 cooperated with the avoidance portion 11 is provided on the wiring cover plate 20, and the limiting space (as shown in a part B in Fig. 18) for clamping the wire connection piece 70 is formed between the protruding portion 21 and the wiring base 10, such an arrangement enables the wire connection piece 70 to be directly clamped on the wiring cover plate 20 and the wiring base 10 so as to avoid a step of fixing a bolt on the wiring base 10 for the connection of the wire connection piece 70. The efficiency of disassembling and assembling a wire is effectively improved, and user usage experience is improved.

Herein, there are a plurality of avoidance portions 11, the plurality of avoidance portions 11 are provided at intervals along a long side direction of the wiring base 10, and there are a plurality of protruding portions 21, the plurality of protruding portions 21 and the plurality of avoidance portions 11 are provided correspondingly one by one. Such an arrangement is capable of enabling the plurality of limiting spaces for clamping the wire connection pieces 70 to be formed between the plurality of avoidance portions 11 and the plurality of protruding portions 21, such an arrangement is capable of effectively improving practicability and reliability of the wiring assembly.

In some embodiments, as shown in Fig. 1, the avoidance portion 11 is an avoidance notch provided on a first side wall 12 of the wiring base 10. Such an arrangement is convenient to machine, and machining efficiency of the wiring assembly is improved.

In some embodiments, the wiring base 10 further includes a second side wall 13 and a third side wall 14, the second side wall 13 is provided opposite to the third side wall 14, a first end of the first side wall 12 is provided adjacent to the second side wall 13, a second end of the first side wall 12 is provided adjacent to the third side wall 14, the second side wall 13 and the third side wall 14 are provided with a limiting step 15, and the wiring cover plate 20 is provided with an elastic buckle 22 cooperated with the limiting step 15. Such an arrangement is capable of improving connection stability between the wiring cover plate 20 and the wiring base 10.

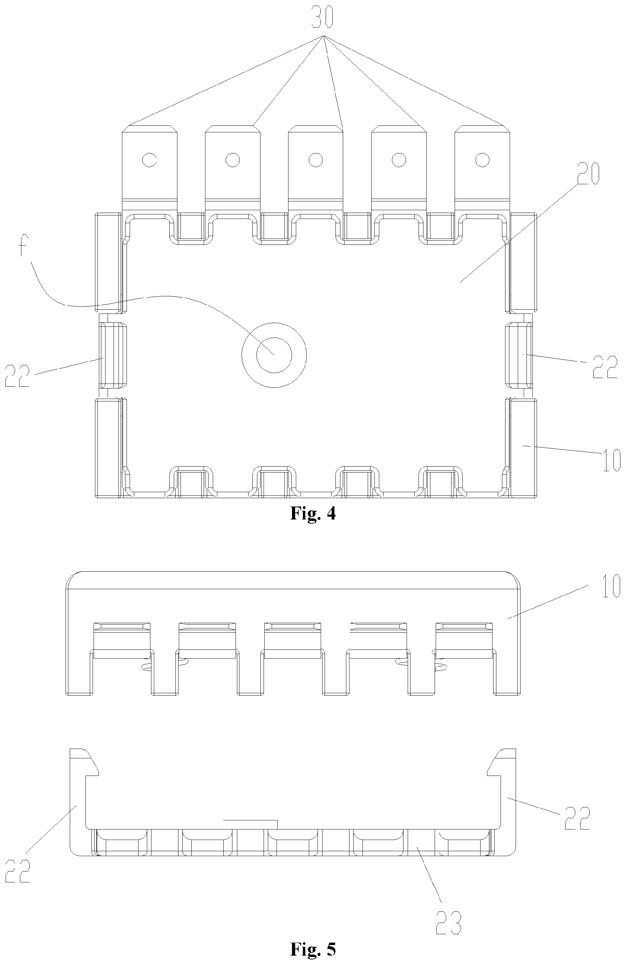

As shown in Fig. 4, in some embodiments, the wiring assembly further includes: a conducting piece 30. A first end of the conducting piece 30 is used to be conducted with the wire connection piece 70, and a second end of the conducting piece 30 is extended to an outside of the wiring base 10 so as to form a wiring end; in some embodiments, the conducting piece 30 and the wiring base 10 are connected together to form a whole structure, or the conducting piece 30 and the wiring cover plate 20 are connected together to form a whole structure. Such an arrangement is capable of improving reliability of the wiring assembly.

In some embodiments, there are a plurality of conducting pieces 30, there are a plurality of avoidance portions 11, and there are a plurality of protruding portions 21, the plurality of avoidance portions 11 and the plurality of protruding portions 21 are mutually cooperated to form plurality of limiting spaces, the plurality of conducting pieces 30 and the plurality of limiting spaces are disposed correspondingly one by one. Such an arrangement is capable of guaranteeing that one conducting piece 30 is disposed in each limiting space, so a utilization ratio of the wiring assembly is improved.

In order to further improve the connection stability of the wiring assembly, in some embodiments, the wiring assembly further includes a connecting piece 40. The wiring base 10 and the wiring cover plate 20 are provided with connection holes (as shown in f in Fig. 1, Fig. 4, Fig. 10 and Fig. 12) through which the connecting piece 40 passes.

In some embodiments, the wiring base 10 or the wiring cover plate 20 is provided with an upright column 50. The wiring assembly further includes an elastic member 60. The elastic member 60 is provided on the upright column 50 in a sleeving manner, when the wiring cover plate 20 is locked in the assembling position through the connecting piece 40, the elastic member 60 is abutted against at least one of the wiring base 10 and the wiring cover plate 20 and located in a compressing state. Such an arrangement is capable of effectively improving the connection stability between the wiring base 10 and the wiring cover plate 20.

In some embodiments, there are a plurality of upright columns 50, the plurality of upright columns 50 are provided at intervals, there are a plurality of elastic members 60, the plurality of elastic members 60 and the plurality of upright columns 50 are disposed correspondingly one by one. Such an arrangement is capable of enabling a stress between the wiring base 10 and the wiring cover plate 20 to be uniform, so the same pressing force is applied within each limiting space, and then it is guaranteed that a falling situation does not happen to the wire connection piece due to long-time using. In some embodiments, the elastic member 60 is a spring.

In some embodiments, the protruding portion 21 includes a first bulge, the wiring cover plate 20 includes a cover plate body 23 and an elastic buckle 22. A first cover plate edge, opposite to a first side wall 12 of the wiring base 10, of the cover plate body 23 is provided with the first bulge. The elastic buckle 22 is disposed on at least one side edge adjacent to the first cover plate edge. In this way, the stability of connection between the wiring cover plate 20 and the wiring base 10 is effectively improved.

In some embodiments, the protruding portion 21 further includes a second bulge. A second cover plate edge, opposite to the first cover plate edge, of the cover plate body 23 is provided with the second bulge. The second bulge and the first bulge are symmetrically provided. In some embodiments, the first bulge is cooperated with the avoidance portion 11 so as to form the limiting space, or the second bulge is cooperated with the avoidance portion 11 so as to form the limiting space. Namely in the present embodiment, the first bulge and second bulge structures are disposed at two sides of the cover plate body 23 so as to form the limiting space with the avoidance portion 11, in an assembling process, for example, two opposite side edges of the cover plate body 23 are provided with two symmetrical elastic buckles 22, only if it is guaranteed that the elastic buckles 22 are aligned to the limiting steps, the cover plate body 23 can be similarly conveniently assembled on the wiring base 10 after being rotated by 180 degrees and the wire connection piece can be fixed. Such an arrangement is capable of effectively improving the practicability of the wiring cover plate 20.

In some embodiments, there are a plurality of first bulges, the plurality of first bulges are provided at intervals along the first cover plate edge, there are a plurality of second bulges, the plurality of second bulges are provided at intervals along the second cover plate edge, the plurality of second bulges and the plurality of first bulges are disposed correspondingly one by one, there are a plurality of avoidance portions 11, the plurality of avoidance portions 11 and the plurality of first bulges are disposed correspondingly one by one. Such an arrangement is capable of further improving the practicability of the wiring cover plate 20.

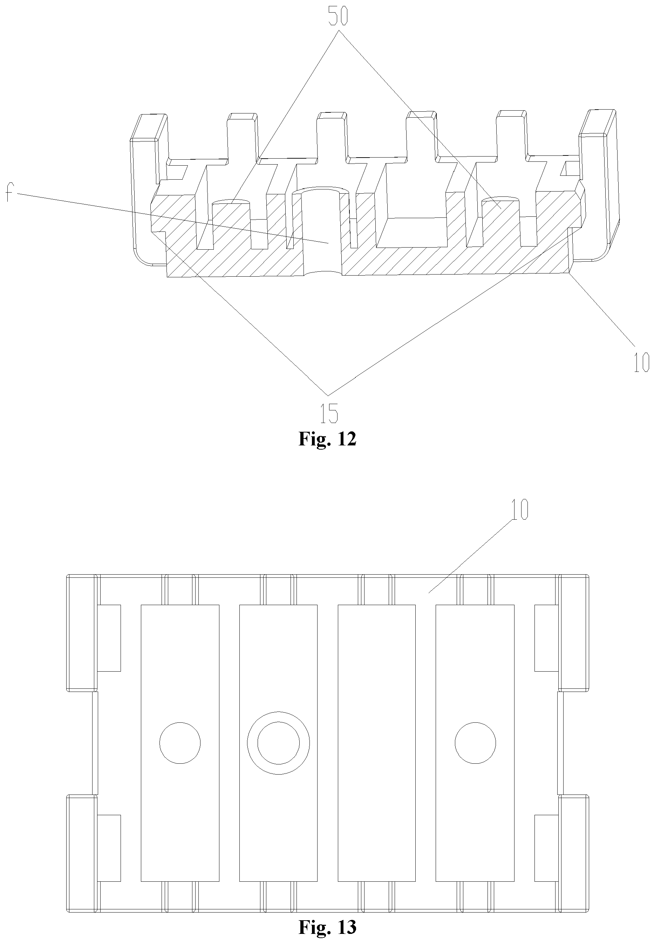

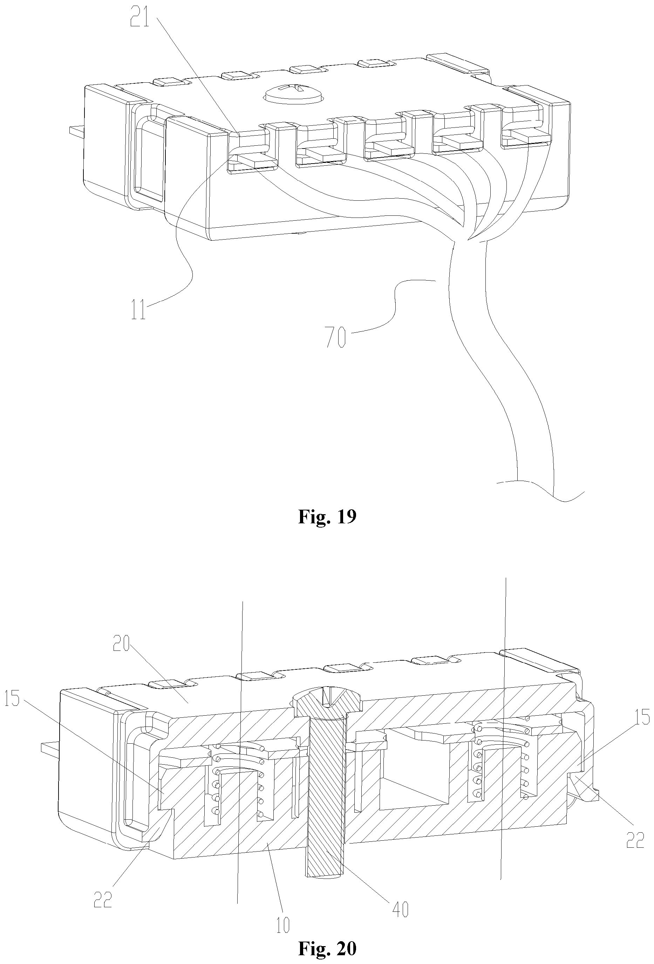

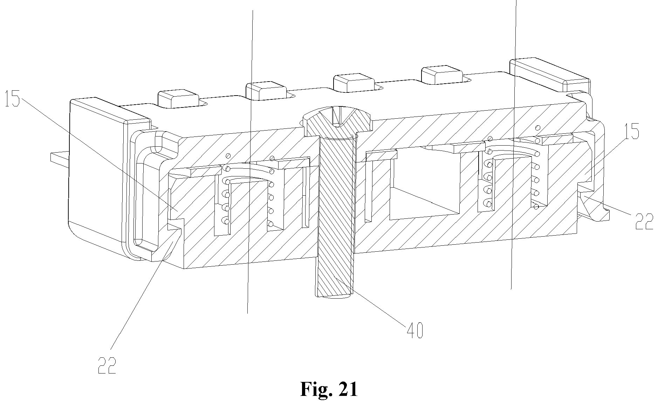

In some embodiments, as shown in Fig. 12 and Fig. 20, the wiring base 10 is provided with the limiting step 15. The wiring cover plate 20 is provided with an elastic buckle 22 cooperated with the limiting step 15. When the wiring cover plate 20 and the wiring base 10 are located in an unlocking state by the connecting piece 40, a pre-tightening force is applied to the wiring cover plate 20 and the wiring base 10 by the elastic member 60 so that the elastic buckle 22 is abutted against a step surface of the limiting step 15. As shown in Fig. 21, in some embodiments, when the wiring cover plate 20 is locked in the assembling position by the connecting piece 40, the elastic buckle 22 is provided at a distance from the step surface of the limiting step 15. Such an arrangement is capable of achieving fixing connection of the wire connection piece through adjusting a tightness state of the connecting piece 40 without detaching the wiring cover plate 20. In some embodiments, the connecting piece 40 is a bolt.

The wiring assembly in the above embodiment can also be used in the technical field of air conditioner equipment, namely according to some embodiments of the invention, an air conditioner is provided, including a wiring assembly, the wiring assembly is the wiring assembly in the above embodiment.

In some embodiments, the air conditioner structure is used, each bolt for fixing the wire connection piece is eliminated, a material cost is saved, production efficiency of the wiring assembly is effectively improved, and a problem that wiring may not be completed after a connection piece bolt is lost in terminal customer home is effectively prevented.

A wiring plate of the air conditioner is capable of, through structure improvement (eliminating each bolt for fixing the wire connection piece), pressing connection pieces of all wires by directly using a body fixing bolt of the wiring plate to press the wiring cover plate, achieving personnel reduction and efficiency improvement and saving the material cost, and greatly improving after-sale installing and wiring efficiency.

In some embodiments, the wiring base is flatly placed, the spring is placed on the upright column of the wiring base, and then the wiring cover plate is locked on the limiting step of the wiring base. A wiring step is performed on the wire connection piece: each wire connection piece is correspondingly inserted in the avoidance notch of a wiring plate component, and then the connecting piece (bolt) is fastened, finally all of the wire connection pieces are tightly pressed by the wire cover plate, in a similar way, wire detaching is a reversed step. Herein, a height of the spring is greater than 0.5 mm in a natural state, and a height of the limiting step of the wiring base is greater than 0.5 mm, after the wiring plate component is pre-assembled, when the limiting spring and the elastic buckle of the wiring cover plate are located in a stop state, a gap between the wiring cover plate and the conducting piece is greater than 0.5 mm, and when the bolt (without the wiring plate connection piece) is fastened, a gap between the elastic buckle on the wiring cover plate and the step surface of the limiting step of the wiring base is greater than 0.5 mm.

In addition to the above, it should be noted that "one embodiment", "another embodiment", "embodiment" and the like mentioned in the description refer that specific features, structures or characteristics described in combination with the embodiment are included in at least one embodiment generally described in the present application. The same expression occurring in multiple places in the description does not necessarily refer to the same embodiment. Furthermore, when one specific feature, structure or characteristic is described in combination with any one embodiment, it is claimed that such feature, structure or characteristic achieved in combination with other embodiments also falls within a scope of the invention.

In the above embodiments, the description of each embodiment has own emphasis, and a part that is not described in detail in a certain embodiment may reference to related descriptions of other embodiments.

The foregoing descriptions are merely some embodiments of the invention and are not intended to limit the invention. For those skilled in the art, the invention may have various changes and modification which shall fall within the protection scope of the invention as defined within the appended claims.

## Claims

1. A wiring assembly, comprising:
a wiring base (10), wherein the wiring base (10) is provided with an avoidance portion (11); a wiring cover plate (20), wherein the wiring cover plate (20) is provided with a protruding portion (21) configured to cooperate with the avoidance portion (11), the wiring cover plate (20) is provided with an assembling position connected with the wiring base (10), and when the wiring cover plate (20) is located at the assembling position, the protruding portion (21) is located within the avoidance portion (11), and a limiting space used for clamping a wire connection piece is formed between the protruding portion (21) and the wiring base (10); wherein the avoidance portion (11) is an avoidance notch provided on a first side wall (12) of the wiring base (10);
a conducting piece (30), a first end of the conducting piece (30) is used to be conducted with the wire connection piece, and a second end of the conducting piece (30) is extended to an outside of the wiring base (10) so as to form a wiring end; and
a connecting piece (40), the wiring base (10) and the wiring cover plate (20) are provided with connection holes through which the connecting piece (40) passes;
**characterized in that** the wiring base (10) or the wiring cover plate (20) is provided with an upright column (50), the wiring assembly further comprises:
an elastic member (60), the elastic member (60) is provided on the upright column (50) in a sleeving manner, when the wiring cover plate (20) is locked in the assembling position through the connecting piece (40), the elastic member (60) is abutted against at least one of the wiring base (10) and the wiring cover plate (20) and located in a compressing state;
wherein the wiring base (10) is provided with a limiting step (15), the wiring cover plate (20) is provided with an elastic buckle (22) configured to cooperate with the limiting step (15), when the wiring cover plate (20) and the wiring base (10) are located in an unlocking state by the connecting piece (40), a pre-tightening force is applied to the wiring cover plate (20) and the wiring base (10) by the elastic member (60) so that the elastic buckle (22) is abutted against a step surface of the limiting step (15).

2. The wiring assembly as claimed in claim 1, wherein there are a plurality of avoidance portions (11), the plurality of avoidance portions (11) are provided at intervals along a long side direction of the wiring base (10), there are a plurality of protruding portions (21), the plurality of protruding portions (21) and the plurality of avoidance portions (11) are provided correspondingly one by one.

3. The wiring assembly as claimed in claim 1, wherein the wiring base (10) comprises a second side wall (13) and a third side wall (14), the second side wall (13) is provided opposite to the third side wall (14), a first end of the first side wall (12) is provided adjacent to the second side wall (13), a second end of the first side wall (12) is provided adjacent to the third side wall (14), the second side wall (13) and/or the third side wall (14) is provided with the limiting step (15).

4. The wiring assembly as claimed in claim 1, wherein the conducting piece (30) and the wiring base (10) are connected together and form a whole structure, or the conducting piece (30) and the wiring cover plate (20) are connected together and form a whole structure.

5. The wiring assembly as claimed in claim 4, wherein there are a plurality of conducting pieces (30), there are a plurality of avoidance portions (11), and there are a plurality of protruding portions (21), the plurality of avoidance portions (11) and the plurality of protruding portions (21) are mutually configured to cooperate to form a plurality of limiting spaces, the plurality of conducting pieces (30) and the plurality of limiting spaces are provided correspondingly one by one.

6. The wiring assembly as claimed in claim 1, wherein there are a plurality of upright columns (50), the plurality of upright columns (50) are provided at intervals, there are a plurality of elastic members (60), the plurality of elastic members (60) and the plurality of upright columns (50) are provided correspondingly one by one; or wherein the elastic member (60) is a spring.

7. The wiring assembly as claimed in claim 1, wherein the protruding portion (21) comprises a first bulge (211), the wiring cover plate (20) comprises:
a cover plate body (23), wherein a first cover plate edge, opposite to a first side wall (12) of the wiring base (10), of the cover plate body (23) is provided with the first bulge (211); and
wherein the elastic buckle (22) is provided on at least one side edge adjacent to the first cover plate edge.

8. The wiring assembly as claimed in claim 7, wherein the protruding portion (21) further comprises a second bulge (212), wherein a second cover plate edge, opposite to the first cover plate edge, of the cover plate body (23) is provided with the second bulge (212), the second bulge (212) and the first bulge (211) are symmetrically provided, the first bulge (211) is configured to cooperate with the avoidance portion (11) so as to form the limiting space, or the second bulge (212) is configured to cooperate with the avoidance portion (11) so as to form the limiting space.

9. The wiring assembly as claimed in claim 8, wherein there are a plurality of first bulges (211), the plurality of first bulges (211) are provided at intervals along the first cover plate edge, there are a plurality of second bulges (212), the plurality of second bulges (212) are provided at intervals along the second cover plate edge, the plurality of second bulges (212) and the plurality of first bulges (211) are provided correspondingly one by one, there are a plurality of avoidance portions (11), the plurality of avoidance portions (11) and the plurality of first bulges are provided correspondingly one by one.

10. The wiring assembly as claimed in claim 1, wherein when the wiring cover plate (20) is locked in the assembling position by the connecting piece (40), the elastic buckle (22) is provided at a distance from the step surface of the limiting step (15).

11. An air conditioner, comprising the wiring assembly as claimed in any one of claims 1 to 10.

## Patentansprüche

1. Verkabelungsbaugruppe, umfassend:
eine Verdrahtungsbasis (10), wobei die Verdrahtungsbasis (10) mit einem Vermeidungsabschnitt (11) versehen ist; eine Verdrahtungsabdeckplatte (20), wobei die Verdrahtungsabdeckplatte (20) mit einem vorstehenden Abschnitt (21) versehen ist, der so eingerichtet ist, dass er mit dem Vermeidungsabschnitt (11) zusammenarbeitet, die Verdrahtungsabdeckplatte (20) mit einer mit der Verdrahtungsbasis (10) verbundenen Montageposition versehen ist, und wenn sich die Verdrahtungsabdeckplatte (20) an der Montageposition befindet, sich der vorstehende Abschnitt (21) innerhalb des Vermeidungsabschnitts (11) befindet, und ein Begrenzungsraum zum Klemmen eines Drahtverbindungsstücks zwischen dem vorstehenden Abschnitt (21) und der Verdrahtungsbasis (10) gebildet wird; wobei der Vermeidungsabschnitt (11) eine Vermeidungskerbe ist, die an einer ersten Seitenwand (12) der Verdrahtungsbasis (10) vorgesehen ist;
ein leitendes Stück (30), ein erstes Ende des leitenden Stücks (30) dient zur Verbindung mit dem Drahtverbindungsstück und ein zweites Ende des leitenden Stücks (30) erstreckt sich zur Außenseite der Verdrahtungsbasis (10), um ein Verdrahtungsende zu bilden; und
ein Verbindungsstück (40), die Verdrahtungsbasis (10) und die Verdrahtungsabdeckplatte (20) sind mit Verbindungslöchern versehen, durch die das Verbindungsstück (40) verläuft;
**dadurch gekennzeichnet, dass** die Verdrahtungsbasis (10) oder die Verdrahtungsabdeckplatte (20) mit einer aufrechten Säule (50) versehen ist, umfasst die Verdrahtungsbaugruppe ferner:
ein elastisches Element (60), wobei das elastische Element (60) an der aufrechten Säule (50) schlauchförmig vorgesehen ist, wenn die Verdrahtungsabdeckplatte (20) in der Montageposition durch das Verbindungsstück (40) arretiert ist, das elastische Element (60) an wenigstens einen der Verdrahtungsbasis (10) und die Verdrahtungsabdeckplatte (20) anliegt und sich in einem komprimierenden Zustand befindet;
wobei die Verdrahtungsbasis (10) mit einem begrenzenden Schritt (15) versehen ist, die Verdrahtungsabdeckplatte (20) mit einer elastischen Schnalle (22) versehen ist, die so eingerichtet ist, dass sie mit dem begrenzenden Schritt (15) zusammenarbeitet, wenn sich die Verdrahtungsabdeckplatte (20) und die Verdrahtungsbasis (10) in einem Entriegelungszustand durch das Verbindungsstück (40) befinden, wird eine Vorspannkraft auf die Verdrahtungsabdeckplatte (20) und die Verdrahtungsbasis (10) durch das elastische Element (60) ausgeübt, so dass die elastische Schnalle (22) an einer Trittfläche der Begrenzungsstufe (15) anliegt.

2. Verdrahtungsanordnung nach Anspruch 1, wobei mehrere Vermeidungsabschnitt (11) vorhanden sind und die mehreren Vermeidungsabschnitt (11) in Abständen entlang einer Längsseitenrichtung der Verdrahtungsbasis (10) der vorstehenden Abschnitte (21) vorgesehen sind, die mehreren vorstehenden Abschnitte (21) und die mehreren Vermeidungsabschnitt (11) entsprechend nacheinander vorgesehen sind.

3. Verdrahtungsbaugruppe nach Anspruch 1, wobei die Verdrahtungsbasis (10) eine zweite Seitenwand (13) und eine dritte Seitenwand (14) aufweist, die zweite Seitenwand (13) gegenüber der dritten Seitenwand (14) vorgesehen ist, ein erstes Ende der ersten Seitenwand (12) benachbart zur zweiten Seitenwand (13) vorgesehen ist, ein zweites Ende der ersten Seitenwand (12) benachbart zur dritten Seitenwand (14) vorgesehen ist, die zweite Seitenwand (13) und/oder die dritte Seitenwand (14) mit dem begrenzenden Schritt (15) versehen ist.

4. Verdrahtungsbaugruppe nach Anspruch 1, wobei das leitende Stück (30) und die Verdrahtungsbasis (10) miteinander verbunden sind und eine gesamte Struktur bilden, oder das leitende Stück (30) und die Verdrahtungsabdeckplatte (20) miteinander verbunden sind und eine gesamte Struktur bilden.

5. Verdrahtungsbaugruppe nach Anspruch 4, wobei mehrere leitende Stücke (30) vorhanden sind, mehrere Vermeidungsabschnitte (11) vorhanden sind und mehrere vorstehende Abschnitte (21) vorhanden sind, die mehreren Vermeidungsabschnitte (11) und die mehreren vorstehenden Abschnitte (21) gegenseitig so eingerichtet sind, dass sie zusammenwirken, um mehrere begrenzende Räume zu bilden, wobei die mehreren leitenden Stücke (30) und die mehreren begrenzenden Räume entsprechend nacheinander bereitgestellt werden.

6. Verdrahtungsbaugruppe nach Anspruch 1, wobei mehrere senkrechte Säulen (50) vorhanden sind, die mehreren aufrechten Säulen (50) in Abständen bereitgestellt sind, mehrere elastische Elemente (60) vorhanden sind, die mehreren elastischen Elemente (60) und die mehreren aufrechten Säulen (50) entsprechend nacheinander bereitgestellt sind; oder wobei das elastische Element (60) eine Feder ist.

7. Verdrahtungsbaugruppe nach Anspruch 1, wobei der vorstehende Abschnitt (21) eine erste Ausbuchtung (211) aufweist, wobei die Verdrahtungsabdeckplatte (20) umfasst:
einen Deckplattenkörper (23), wobei eine erste Abdeckplattenkante, entgegengesetzt zu einer ersten Seitenwand (12) der Verdrahtungsbasis (10), des Deckplattenkörpers (23) mit der ersten Ausbuchtung (211) versehen ist; und
wobei
die elastische Schnalle (22) an wenigstens einer Seitenkante neben der ersten Abdeckplattenkante vorgesehen ist.

8. Verdrahtungsbaugruppe nach Anspruch 7, wobei der vorstehende Abschnitt (21) ferner eine zweite Ausbuchtung (212) aufweist, wobei eine zweite Abdeckplattenkante, entgegengesetzt zur ersten Abdeckplattenkante, des Deckplattenkörpers (23) mit der zweiten Ausbuchtung (212) versehen ist, wobei die zweite Ausbuchtung (212) und die erste Ausbuchtung (211) symmetrisch bereitgestellt sind, wobei die erste Ausbuchtung (211) so eingerichtet ist, dass sie mit dem Vermeidungsabschnitt (11) zusammenarbeitet, um den begrenzenden Raum zu bilden, oder die zweite Ausbuchtung (212) so eingerichtet ist, dass sie mit dem Vermeidungsabschnitt (11) kooperiert, um den begrenzenden Raum zu bilden.

9. Verdrahtungsbaugruppe nach Anspruch 8, wobei mehrere erste Ausbuchtungen (211) vorhanden sind, die mehreren ersten Ausbeulungen (211) in Abständen entlang der ersten Abdeckplattenkante vorgesehen sind, mehrere zweite Ausbeulungen (212) vorhanden sind, die mehreren zweiten Ausbeulungen (212) in Abständen entlang der zweiten Abdeckplattenkante vorgesehen sind, die mehreren zweiten Ausbeulungen (212) und die mehreren ersten Ausbeulungen (211) entsprechend nacheinander vorgesehen sind, mehrere Vermeidungsabschnitte (11) vorhanden sind, die mehreren Vermeidungsabschnitte (11) und die mehreren ersten Ausbuchtungen entsprechend nacheinander vorgesehen sind.

10. Verdrahtungsbaugruppe nach Anspruch 1, wobei, wenn die Verdrahtungsabdeckplatte (20) in der Montageposition durch das Verbindungsstück (40) arretiert ist, die elastische Schnalle (22) in einem Abstand von der Stufenfläche der Begrenzungsstufe (15) bereitgestellt ist.

11. Eine Klimaanlage, die die Verdrahtungsbaugruppe nach einem der Ansprüche 1 bis 10 umfasst.

## Revendications

1. Ensemble de câblage, comprenant :
une base de câblage (10), dans lequel la base de câblage (10) est pourvue d'une partie d'évitement (11) ; une plaque de couverture de câblage (20), dans lequel la plaque de couverture de câblage (20) est pourvue d'une partie en saillie (21) configurée pour coopérer avec la partie d'évitement (11), la plaque de couverture de câblage (20) est pourvue d'une position d'assemblage reliée à la base de câblage (10), et lorsque la plaque de couverture de câblage (20) est située dans la position d'assemblage, la partie en saillie (21) est située à l'intérieur de la partie d'évitement (11), et un espace de limitation utilisé pour monter une pièce de raccordement de câble est formé entre la partie en saillie (21) et la base de câblage (10) ; dans lequel la partie d'évitement (11) est une encoche d'évitement située sur une première paroi latérale (12) de la base de câblage (10) ;
une pièce conductrice (30), une première extrémité de la pièce conductrice (30) est utilisée pour être raccordée avec la pièce de raccordement de câble, et une seconde extrémité de la pièce conductrice (30) est étendue vers un extérieur de la base de câblage (10) de manière à former une extrémité de câblage ; et
une pièce de raccordement (40), la base de câblage (10) et la plaque de couverture de câblage (20) sont pourvues de trous de raccordement à travers lesquels passe la pièce de raccordement (40) ;
**caractérisé en ce que** la base de câblage (10) ou la plaque de couverture de câblage (20) est pourvue d'une colonne verticale (50), l'ensemble de câblage comprend en outre :
un élément élastique (60), l'élément élastique (60) est fourni sur la colonne verticale (50) à la manière d'un manchon, lorsque la plaque de couverture de câblage (20) est verrouillée dans la position d'assemblage par la pièce de raccordement (40), l'élément élastique (60) est en butée contre au moins l'une de la base de câblage (10) et de la plaque de couverture de câblage (20) et situé dans un état de compression ;
dans lequel la base de câblage (10) est pourvue d'un épaulement de limitation (15), la plaque de couverture de câblage (20) est pourvue d'une boucle élastique (22) configurée pour coopérer avec l'épaulement de limitation (15), lorsque la plaque de couverture de câblage (20) et la base de câblage (10) sont placées dans un état de déverrouillage par la pièce de raccordement (40), une force de pré-serrage est appliquée à la plaque de couverture de câblage (20) et à la base de câblage (10) par l'élément élastique (60) de sorte que la boucle élastique (22) vienne en butée contre une surface d'épaulement de l'épaulement de limitation (15).

2. Ensemble de câblage selon la revendication 1, dans lequel il existe une pluralité de parties d'évitement (11), la pluralité de parties d'évitement (11) sont fournies à intervalles le long d'une direction de grand côté de la base de câblage (10), il existe une pluralité de parties en saillie (21), la pluralité de parties en saillie (21) et la pluralité de parties d'évitement (11) sont fournies en correspondance une à une.

3. Ensemble de câblage selon la revendication 1, dans lequel la base de câblage (10) comprend une deuxième paroi latérale (13) et une troisième paroi latérale (14), la deuxième paroi latérale (13) est opposée à la troisième paroi latérale (14), une première extrémité de la première paroi latérale (12) est adjacente à la deuxième paroi latérale (13), une seconde extrémité de la première paroi latérale (12) est adjacente à la troisième paroi latérale (14), la deuxième paroi latérale (13) et/ou la troisième paroi latérale (14) est pourvue d'un épaulement de limitation (15).

4. Ensemble de câblage selon la revendication 1, dans lequel la pièce conductrice (30) et la base de câblage (10) sont raccordées ensemble et forment une structure complète, ou la pièce conductrice (30) et la plaque de couverture de câblage (20) sont raccordées ensemble et forment une structure complète.

5. Ensemble de câblage selon la revendication 4, dans lequel il existe une pluralité de pièces conductrices (30), une pluralité de parties d'évitement (11), et une pluralité de parties en saillie (21), la pluralité de parties d'évitement (11) et la pluralité de parties en saillie (21) sont mutuellement configurées pour coopérer afin de former une pluralité d'espaces de limitation, la pluralité de pièces conductrices (30) et la pluralité d'espaces de limitation sont fournis en correspondance un à un.

6. Ensemble de câblage selon la revendication 1, dans lequel il existe une pluralité de colonnes verticales (50), la pluralité de colonnes verticales (50) sont prévues à intervalles, il existe une pluralité d'éléments élastiques (60), la pluralité d'éléments élastiques (60) et la pluralité de colonnes verticales (50) sont prévues en correspondance une à une ; ou dans lequel l'élément élastique (60) est un ressort.

7. Ensemble de câblage selon la revendication 1, dans lequel la partie en saillie (21) comprend un premier renflement (211), la plaque de couverture de câblage (20) comprend :
un corps de plaque de couverture (23), dans lequel un premier bord de plaque de couverture, opposé à une première paroi latérale (12) de la base de câblage (10), du corps de plaque de couverture (23) est pourvu du premier renflement (211) ; et
dans lequel la boucle élastique (22) est prévue sur au moins un bord latéral adjacent au premier bord de plaque de couverture.

8. Ensemble de câblage selon la revendication 7, dans lequel la partie en saillie (21) comprend en outre un second renflement (212), dans lequel un second bord de plaque de couverture, opposé au premier bord de plaque de couverture, du corps de plaque de couverture (23) est pourvu du second renflement (212), le second renflement (212) et le premier renflement (211) sont prévus symétriquement, le premier renflement (211) est configuré pour coopérer avec la partie d'évitement (11) de manière à former l'espace de limitation, ou le second renflement (212) est configuré pour coopérer avec la partie d'évitement (11) de manière à former l'espace de limitation.

9. Ensemble de câblage selon la revendication 8, dans lequel il existe une pluralité de premiers renflements (211), la pluralité de premiers renflements (211) sont fournis à intervalles le long du premier bord de plaque de couverture, il existe une pluralité de seconds renflements (212), la pluralité de seconds renflements (212) sont fournis à intervalles le long du second bord de plaque de couverture, la pluralité de seconds renflements (212) et la pluralité de premiers renflements (211) sont prévus en correspondance un à un, il existe une pluralité de parties d'évitement (11), la pluralité de parties d'évitement (11) et la pluralité de premiers renflements sont prévus en correspondance un à un.

10. Ensemble de câblage selon la revendication 1, dans lequel lorsque la plaque de couverture de câblage (20) est verrouillée en position d'assemblage par la pièce de raccordement (40), la boucle élastique (22) se trouve à une certaine distance de la surface d'épaulement de l'épaulement de limitation (15).

11. Climatiseur comprenant l'ensemble de câblage selon l'une quelconque des revendications 1 à 10.
